# EUROPEAN PATENT APPLICATION

(11) **EP 1 393 927 A1**
(43) Date of publication of application: **03.03.2004**
(21) Application number: 03255091.5
(22) Date of filing: 15.07.2003
(51) Int. Cl.: B42D 15/10, G06K 19/00

(54) **Intelligent document**

(30) Priority: 27.08.2002 US 229751
(71) Applicant: Silicon Valley Micro C Corporation, San Jose, California 95119 (US)
(72) Inventor: Huang, Su Shiong, Bellevue Washington 98004 (US)
(74) Representative: Cross, Rupert Edward Blount

(57) **Abstract**

A self-authenticating intelligent document (10) in sheet medium form has an information storage and transfer circuit including an RFID integrated circuit (15) and an antenna (14). When information is formed on the surface of the sheet medium by printing, an identical version of the visible information is stored in read-only fashion in the circuit (15) using inductive transfer. To verify the authenticity of the document, the electronic version stored in the circuit is read out and compared with the visible version. When the two versions are identical, the document is authentic. A visible indicator (17) is attached to the sheet medium and is illuminated whenever information is being accessed from the circuit to aid in locating a sought document stored with other documents. To minimize inductive interaction between circuits on adjacent documents, the locations of the circuits on the sheet media are staggered. The locations of the visible indicators are also staggered to facilitate viewing when activated.

## Description

### BACKGROUND OF THE INVENTION

This invention relates to document preparation, storage, and retrieval. More particularly, this invention relates to a method and system for creating documents on sheet media which contain both visible and electronic versions of information and the documents produced thereby.

Sheet media documents are universally used for recording information for later reference. Originally prepared by hand, such documents are now frequently created by machines such as typewriters, word processors and personal computers. When created by hand, the original document is typically stored in some fashion, typically in an envelope or a file folder, for future reference. Machine copies are typically made and distributed to all persons having a perceived need for the copy and the information contained therein. When created using word processors and personal computers, the information comprising the document under creation is first manually entered using a keyboard to produce an electronic version, followed by printing a viewable version of the document on sheet media, such as plain paper. The electronic version is either permanently stored using some form of memory (such as a magnetic tape or disk), or erased from the temporary machine memory. If permanently stored, the document information may be later recalled and used to produce another sheet media copy. If erased, the electronic version is forever lost for future reference.

Existing documents in sheet media form are typically copied, when necessary, by means of a copying machine or a scanner attached to a computer. If an electronic version of the original sheet media document exists, a copy can be produced from the electronic version using conventional word processing copy routines. However, unless the electronic version of the document is stored in a completely unalterable manner, there is no guarantee that the reproduced version is identical to the original version.

Currently, the historical integrity of a sheet media document is only as good as the security procedures controlling the custodial process for the document. Important documents have been known to be altered for various improper purposes, in spite of security procedures which, on their face, would appear to prevent such document corruption. When an original, genuine document is altered in an unauthorized manner, the integrity of the document is compromised, which is highly undesirable.

Documents which have been prepared and stored for future reference are often sought long after they have been relegated to storage. Typically, the search entails finding the storage container, usually a file cabinet drawer or a storage box, in which the document was stored, then locating the particular document by physically searching through the individual sheets in the container or in a file folder in the container. This search is usually very time consuming and thus inefficient.

### SUMMARY OF THE INVENTION

The invention comprises a method and system for creating documents on sheet media which guarantees the authenticity of the original document. Each original document contains both visible and unalterable electronic versions of the information comprising the document. Each document optionally contains a visible indicator for facilitating the identification of a document under search in a storage facility containing many documents.

In the broadest aspect, the invention comprises a sheet medium, such as paper or plastic, for providing a surface on which information can be formed, as by printing. An information storage and transfer circuit including an RFID integrated circuit and an antenna is carried by the sheet medium. The information storage and transfer circuit is capable of storing an electronic copy of the visible information in read-only form.

A document is prepared by forming the visible version of the information on one or both surfaces of the sheet medium, and storing an identical version of the information in the information storage and transfer circuit. After preparation of the document, the identity of the two versions may be verified by reading out the electronic version and comparing it with the visible version. After verification, the document can be passed on for the intended use.

A document can be checked for authenticity at any time by simply performing the verification process-viz., reading out the electronic version and comparing it with the visible version. If the two versions are identical, the document is genuine and unaltered from its original state.

In order to minimize any inductive interaction between circuits on different adjacent documents, the locations of the circuits can be varied from document to document so that the antennas of the circuits on different documents do not overlap.

In order to aid in the location of a document which has been stored along with other documents, a visible indicator, preferably an LED, is attached to a document along the upper margin. The visible indicator is connected to the RFID circuit and activated thereby whenever information is accessed from the circuit. The locations of the visible indicators may be staggered from document to document in order to facilitate viewing.

The invention provides a convenient solution to the problem of document authentication. The relative size of the information storage and transfer circuit is completely compatible with ordinary document paper, and the preparation and verification processes are easy to learn and perform.

For a fuller understanding of the nature and advantages of the invention, reference should be made to the ensuing detailed description taken in conjunction with the accompanying drawings.

### BRIEF DESCRIPTION OF THE DRAWINGS

FIG. 1 is a plan view of a document incorporating the invention;
FIG. 2 is a schematic block diagram illustrating the preferred method of preparing the document of Fig. 1;
FIG. 3 is a schematic view of a printing device for preparing the document of Fig. 1;
Fig. 4 is a schematic view of a device for reading the electronic version of the document of Fig. 1;
Fig. 5 is a plan view of a document incorporating the invention illustrating an alternate embodiment in which the location of the electronic components may be varied in a multiple page application; and
Fig. 6 is a schematic plan view of a folio of three documents incorporating the invention illustrating an alternate embodiment in which the location of visible indicators may be varied to enhance document identification and physical retrieval.

### DETAILED DESCRIPTION OF THE PREFERRED EMBODIMENTS

The invention has wide application to the field of document preparation, archiving and retrieval.

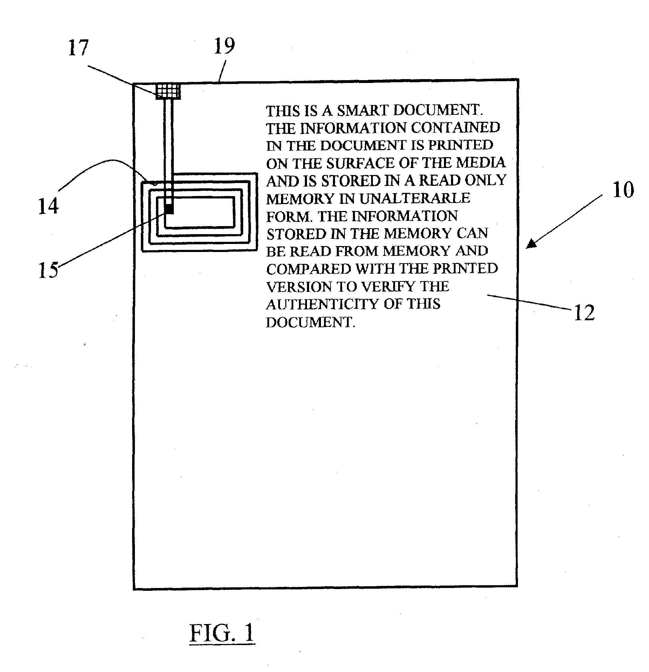

Turning now to the drawings, Fig. 1 is a plan view of a single document in readable sheet form incorporating the invention. As seen in this Fig., a document 10 in sheet media form has visible information 12 permanently formed thereon using conventional techniques, such as ink jet printing, laser printing or the equivalent. Although only the obverse side of document 10 is shown in Fig. 1, visible information may also be carried by the reverse side of document 10 to provide a two-sided readable document.

Incorporated into document 10 are a small loop antenna 14 electrically connected to an RFID electronic chip 15. A visible indicator 17, such as a small LED, is preferably attached to document 10 at a physical location at which the state of the indicator 17 can be readily observed when document 10 is stored. As seen in Fig. 1, this physical location is adjacent the upper margin 19 of document 10. Visible indicator 17 is electrically connected to RFID chip 15, which controls the state of indicator 17. Visible indicator 17 is preferably a type CMD28-21 SRC surface mount LED currently available from Chicago Miniature Lamp, Inc. Other visible indicators may also be used.

Loop antenna 14 is a multi-turn ohmic conductor formed in any one of several known ways. One such technique is silver paste printing on a polyethylene terephthalate (PET) substrate as disclosed in U.S patent no. 6,373,708 B1 issued April 16, 2002, the disclosure of which is hereby incorporated by reference. Another technique is copper deposition on a substrate as practiced by RCD Technology Corporation of Bethlehem, Pennsylvania. The size of the coil (coil diameter and thickness) and the number of turns will be determined by the requirements of a particular application. The function of loop antenna 14 is to provide electromagnetic transfer of information between RFID chip 15 and outside devices, such as a host CPU, as well as to enable inductive transfer of electrical power from an outside device to RFID chip 15 to electrically power the active circuit elements within RFID chip 15 and visible indicator 17.

RFID chip 15 may be a commercially available or a custom-designed integrated circuit device having the standard internal functional components commonly found in an RFID (radio frequency identification) integrated circuit. Such standard components include an RF and analog section, a CPU, a ROM and an EEPROM (see1999 IEEE International Solid-State Circuits Conference publication 0-7803-5129-0/99, Figure 9.1.1: RFID transponder IC block diagram). RFID chip 15 receives power via loop antenna 14 when interrogated by an outside device, and communicates with the outside device using standard protocols, such as the ISO 14443 protocol or the ISO15693 protocol. The size of RFID chip 15 is on the order of 1.4 x 1.3 mm, with a thickness of about 0.13 mm. This compares favorably to the average thickness of 0.1 mm for document paper. As will be described more fully below, when a document is being originally prepared, the information to be included in the document is written into the ROM (read-only memory) incorporated into the RFID chip 15. Once this information is written once into the ROM, it cannot be written over or otherwise altered by any interrogation device. Stated differently, once the document has been prepared, RFID chip 15 can be interrogated by an outside device and can only supply the document information to the outside device-i.e, it cannot alter the document information stored in the ROM.

Loop antenna 14 and RFID chip 15 are preferably both incorporated into an ID tag, such as that shown and described in U.S. patent no. 6,154,137 issued November 28, 2000, the disclosure of which is hereby incorporated by reference. Generally, an ID tag has the antenna and the RFID chip mounted on or encapsulated in a thin substrate, such as the PET substrate noted above. The ID tag is incorporated into the sheet media, which may be paper, plastic material such as Mylar sheet media, or any other known sheet media material used in the preparation of sheet media documents. Incorporation of the ID tag into the sheet media may be done by adhesion to one of the sheet surfaces, bonding within the sheet media material, or by using any other known technique for firmly embedding the thin plastic ID tag into a sheet media material. Once the sheet media has been prepared by incorporating the ID tag, the sheet is ready for preparation of the document.

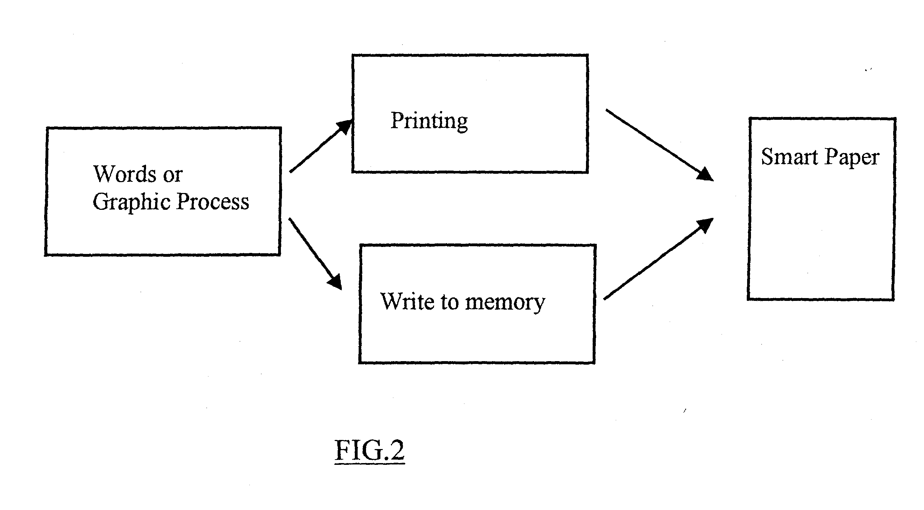

With reference to Fig. 2, the general process for preparing a document according to the invention is as follows. The information (which can be text only, graphics only or a combination of the two types) is first composed using a host device, such as a PC, a word processor or any other known device for composing documents. Once the information is composed, it is printed onto one or both sides of the sheet media. The same information is also electromagnetically transferred to the RFID chip and is written into the ROM portion of the RFID chip 15. It is noted that the printing step and the electromagnetic transfer step may both be conducted simulltaneously or may be performed sequentially. When both the printing and writing steps are completed, the document is finished, and may be put to its intended purpose. Preferably, the prepared document is verified using the procedure described below before passing the document on for use.

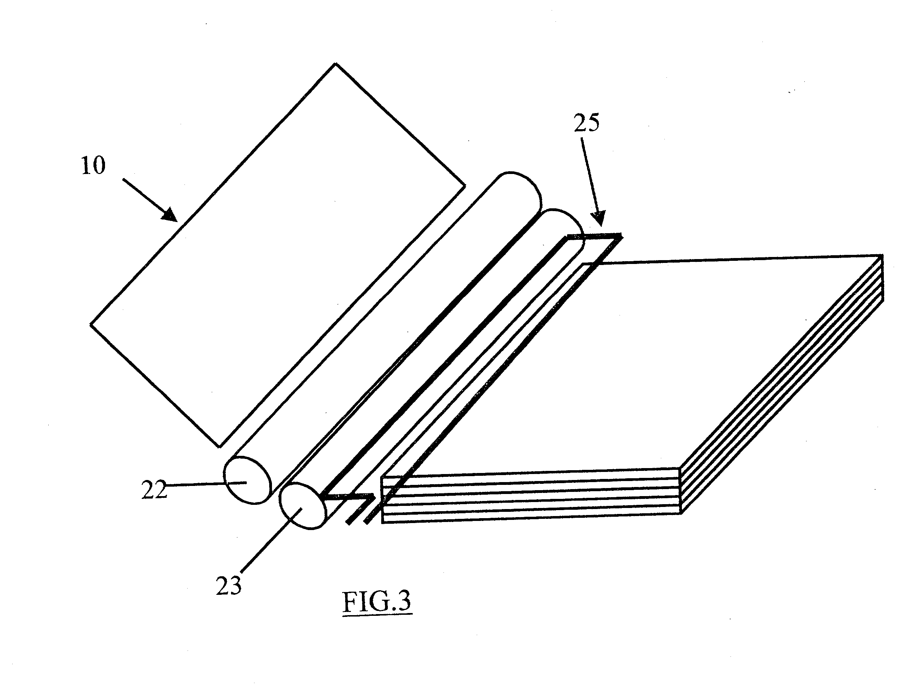

Fig. 3 schematically illustrates a writing device for use in the preparation of a document according to the invention. As seen in this Fig., a printer having feed rollers 22, 23 receives a blank document sheet 10 and feeds the sheet through a print region (not shown). The printer has a write antenna 25 spanning the width of a document sheet 10 and transmits the electromagnetic version of the information to the RFID chip 15 incorporated into the document sheet 10.

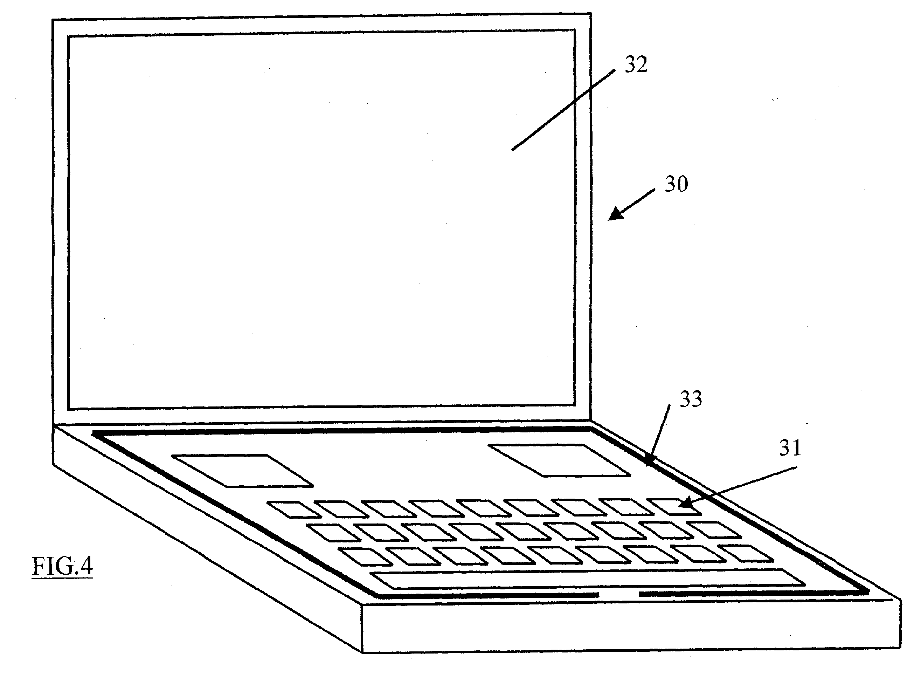

Once a document has been prepared according to the invention, it can be verified by reading out the information stored in the ROM portion of the RFID chip 15 and comparing the electronic version of the information with the printed version. Fig. 4 illustrates this verification process. As seen in this Fig., a conventional lap-top computer 30 having a keyboard 31 and a display 32 is provided with a read antenna 33 at a convenient location, such as around the perimeter of the keyboard 31 as illustrated. Read antenna 33 is connected to the CPU inside computer 30 using one of the standard interfaces normally found in such computers. Computer 30 also has installed therein a computer program which is functionally capable of controlling the interrogation process using the protocols incorporated into RFID chip 15 so that the document contents in the ROM portion of RFID chip 15 can be extracted by interrogation and stored in the memory of computer 30. To extract the information, document 10 is placed on keyboard 31 and computer 30 is operated to start the interrogation process. Read antenna 33 functions to transfer power into RFID chip 15 located on document 10 and to transfer the information received via document antenna 14 into the CPU of computer 30. Once extracted, the information can be displayed on display 32 and the displayed version can be visually compared with the printed version. In addition, if desired, the displayed version can be printed out onto a sheet media blank, and this print-out can be compared with the original. As will be apparent, any variation between the original and the extracted version will prove that the original has been altered.

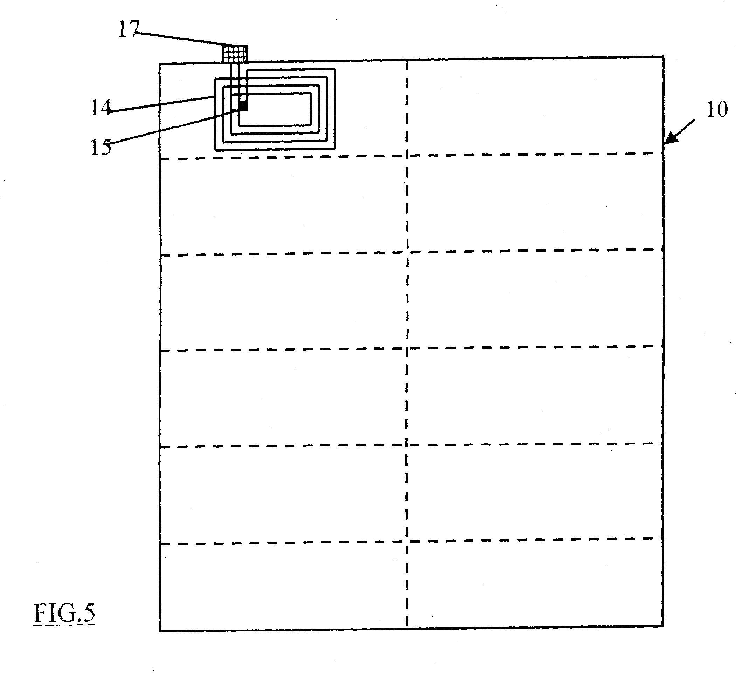

In order to reduce the possibility of cross-talk or other mutual interaction between the loop antennas 14 of different documents 10 when several such documents are in close proximity (as stored in a file or fastened together in a multi-page document), the document sheet 10 is virtually partitioned into different regions in which the ID tag for that document sheet may be located. Fig. 5 illustrates one such virtual partitioning. As seen in this Fig., a document sheet 10 is virtually partitioned into 6 rows and 2 columns. The ID tag containing antenna 14, RFID chip 15 and optional visible indicator 17 is located in row 1, column 1 for the Fig. 5 document sheet 10. For other document sheets 10, the ID tag may be located in location row 1, column 2; row 2, column 1; row 2, column 2; ... , row 6, column 2. In general, and depending on the physical dimensions of the ID tag and sheet blanks 10, each sheet blank 10 may be virtually partitioned into m rows and n columns, where m and n are both integers. In addition, each sheet blank may have stored in the ROM portion of RFID chip 15, a character which specifies the physical location on the sheet for the ID tag. When preparing a series of sheet documents which are intended to be stored in close proximity (such as a multi-page document), the preparation process may include a routine for selecting sheet blanks having different ID tag locations for sequential document preparation. This routine may include the use of several hoppers or other containers for the sheet blanks, storing blanks with the same ID tag location in a given hopper, and feeding sheet blanks from the different hoppers in accordance with a predetermined location selection scheme.

As noted above, each sheet document 10 is optionally provided with a visible indicator 17 located near one of the margins of the sheet. Visible indicator 17 is provided in order to facilitate retrieval of a stored document. In many facilities, sheet media documents, once prepared, are ultimately stored in some type of protective container, such as a file folder. The protective container, in turn, is typically placed inside a larger enclosure, such as a file drawer or a storage box. For document control purposes, documents are typically catalogued by reference to the file folder in which it is placed (if one is used) or with reference to the larger enclosure. When there comes a need to retrieve a certain document, the typical procedure is to consult the catalogue of documents to identify the enclosure and the file folder, open the enclosure, extract the file, and search through the individual documents until the sought document is found. This is very time consuming. Visual indicator 17 can shorten this process substantially. When preparing a given document, the process preferably includes the steps of generating a document identification character (a document ID character), and storing this character in the ROM portion of the RFID chip 15. A hand-held interrogator can be provided which uses the same communication protocol employed in the document preparation process described above. When the file in which the document is supposedly located is retrieved from the larger container, the hand-held interrogator can be activated to generate search signals which include the document identification character. If the sought document is in the file, the visible indicator incorporated therein is activated by the RFID chip 15. The searcher need only note the activated indicator 17 to retrieve the sought document. This process is even more useful for loose collections of documents which are stored in large numbers loosely in a container, such as a storage box.

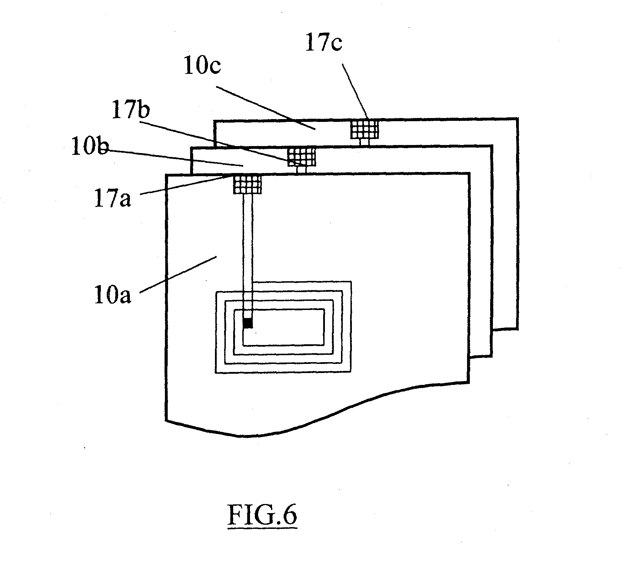

This visual detection capability can be enhanced by staggering the locations of the visible indicators on different documents. Fig. 6 schematically illustrates three stored documents 10a, 10b, 10c each having a visible indicator 17a, 17b, 17c placed at a different lateral location on the upper margin. If such an array of documents is loosely stored in a box among many such documents, the sought document can be readily identified by the activated visible indicator 17 since the lateral spacing enhances the visibility of the activated indicator.

As will now be apparent, the invention enables the preparation of information-bearing documents which are extremely secure and self-authenticating. Moreover, these advantages are provided according to the invention without adding substantial cost and without rendering the document cumbersome due to the relatively modest cost and small size of the ID tags incorporating the RFID chip 15 and the antenna 14. Preparation of intelligent documents is relatively straight-forward, and can be easily taught to office workers. The verification process is likewise easy to learn and to perform.

While the invention has been described with reference to a particular implementation using inductive transfer of power and information other particular implementations may be employed, as desired, such as one using edge contact connectors on one of the margins of the document and ohmic contact tranfer of power and information. However, the inductive transfer embodiment disclosed herein is preferred for reasons of convenience. Therefore, the above should not be construed as limiting the invention, which is defined by the appended claims.

## Claims

1. An intelligent document comprising:
A sheet medium for providing a surface on which information can be formed in a visible manner; and
An information storage and transfer circuit carried by said sheet medium for storing an electronic copy of said information in a read-only manner so that verification of the authenticity of the document can be performed by reading out the electronic version of said information and comparing it with the visible version.

2. The invention of claim 1 wherein said information storage and transfer circuit includes an RFID integrated circuit and an antenna.

3. The invention of claim 1 wherein said intelligent document further includes a visible indicator located along a margin of said sheet medium; and wherein said information storage and transfer circuit further includes a circuit for activating said visible indicator when information stored in said information storage and transfer circuit is accessed.

4. The invention of claim 3 wherein said visible indicator comprises an LED indicator.

5. The invention of claim 1 wherein said information storage and transfer circuit is physically positioned in a preselected location on said sheet medium.

6. The invention of claim 5 wherein the location of the information storage and transfer circuit of different intelligent documents is different for different documents.

7. The invention of claim 3 wherein the location of the visible indicator of different intelligent documents is different for different documents.

8. A method of preparing a self-authenticating intelligent document, said method comprising the steps of:
(a) providing a sheet medium having a surface on which information can be formed and an information storage and transfer circuit in which information can be stored;
(b) forming information on the surface of the sheet medium in visible form; and
(c) storing an identical version of the information formed in step (b) in the information storage and transfer circuit in a read-only manner so that the prepared document contains a visible version of the information and an electronic version of the information which cannot be altered.

9. The method of claim 8 wherein said step ( c ) of storing includes the step of inductively transferring the information into the information storage and transfer circuit through an antenna included therein.

10. The method of claim 8 further including the steps of providing a visible indicator on the sheet medium; and activating the visible indicator when information stored in the information storage and transfer circuit is being accessed in order to provide a visible indication of information access.

11. The method of claim 8 further including the step of verifying the document after initial preparation by reading out the information stored in the information storage and transfer circuit to enable a comparison between the stored version and the visible version formed on the surface of the sheet medium.
